# EUROPÄISCHE PATENTSCHRIFT

(11) **EP 4 157 912 B1**
(45) Veröffentlichungstag und Bekanntmachung des Hinweises auf die Patenterteilung: **22.05.2024**
(21) Anmeldenummer: 21726429.0
(22) Anmeldetag: 25.05.2021
(51) Int. Cl.: C08G 18/20, C08G 18/79, C08G 18/42, C09D 175/06

(54) **BEI NIEDRIGEN TEMPERATUREN VERNETZENDE URETDIONGRUPPEN ENTHALTENDE ZUSAMMENSETZUNGEN**
COMPOSITIONS CONTAINING URETDIONE GROUPS CROSSLINKING AT LOW TEMPERATURES
COMPOSITIONS À RÉTICULATION À BASSES TEMPÉRATURES CONTENANT DES GROUPES URÉTDIONE

(30) Priorität: 29.05.2020 EP 20177419
(43) Veröffentlichungstag der Anmeldung: 05.04.2023
(73) Patentinhaber: Covestro Deutschland AG, 51373 Leverkusen (DE)
(72) Erfinder: LATORRE MARTINEZ, Irene, Cristina, 51373 Leverkusen (DE); LAAS, Hans-Josef, 51519 Odenthal (DE); PIRES, Raul, 50670 Köln (DE); WOODS, Laura, 40597 Düsseldorf (DE); BORN, Ralph-Georg, 42855 Remscheid (DE); GOLLING, Florian, 44139 Dortmund (DE)
(74) Vertreter: Levpat
(86) Internationale Anmeldenummer: PCT/EP2021/063787
(87) Internationale Veröffentlichungsnummer: WO 2021/239678

(56) Entgegenhaltungen:
- EP-A1- 0 803 524
- US-B2- 9 963 538

## Beschreibung

Die vorliegende Erfindung betrifft Uretdiongruppen enthaltende Zusammensetzungen und die Verwendung dieser Zusammensetzungen zur Herstellung von Polyurethan-Kunststoffen oder Beschichtungen. Außerdem betrifft die Erfindung Beschichtungsmittel, enthaltend die Zusammensetzungen, und mit dem Beschichtungsmittel beschichtete Substrate.

Uretdiongruppen enthaltende Polyadditionsprodukte sind als Vernetzerkomponenten für thermisch vernetzbare Polyurethan (PUR)-Lack- und Klebstoffzusammensetzungen bekannt. Als Vernetzungsprinzip dient bei diesen Produkten die thermische Ringöffnung der Uretdiongruppen zu Isocyanatgruppen und deren Reaktion mit einem hydroxyfunktionellen oder aminofunktionellen Bindemittel.

In der Praxis finden Uretdiongruppen enthaltende Vernetzer heute fast ausschließlich zur Herstellung abspalterfreier Polyurethan-(PUR)-Pulverlacke Verwendung (z. B. DE-A 2 312 391, DE-A 2 420 475, EP-A 0 045 994, EP-A 0 045 996, EP-A 0 045 998, EP-A 0 639 598 oder EP-A 0 669 353). Die Verwendung Uretdiongruppen enthaltender Polyurethane als Vernetzerkomponenten für lösemittelhaltige oder wäßrige Einkomponentensystem ist zwar ebenfalls bereits beschrieben (z. B. WO 99/11690, WO 2014/053269), unter anderem aufgrund der vergleichsweise geringen Reaktivität der in Form von Uretdionstrukturen intern blockiert vorliegenden Isocyanatgruppen, die in Kombination mit Polyolen in der Regel Einbrenntemperaturen von mindestens 160°C erforderlich macht, konnten sich solche Systeme im Markt bisher allerdings nicht durchsetzen.

Es hat nicht an Versuchen gefehlt, die Aushärtetemperaturen Uretdiongruppen enthaltender Lacksysteme durch Einsatz geeigneter Katalysatoren zu erniedrigen. Zu diesem Zweck wurden bereits unterschiedliche Verbindungen vorgeschlagen, beispielsweise die aus der Polyurethanchemie bekannten metallorganischen Katalysatoren, wie Zinn(II)-acetat, Zinn(II)-octoat, Zinn(II)-ethylcaproat, Zinn(II)-laurat, Dibutylzinndiacetat, Dibutylzinndilaurat, Dibutylzinnmaleat (z.B. EP-A 0 045 994, EP-A 0 045 998, EP-A 0 601 079, WO 91/07452 oder DE-A 2 420 475), Eisen(III)-chlorid, Zinkchlorid, Zink-2-ethylcaproat und Molybdänglykolat, tertiäre Amine, wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan und N,N'-Dimethylpiperazin (z.B. EP-A 0 639 598) oder N,N,N'-trisubstituierte Amidine, insbesondere bicyclische Amidine, wie 1,5-Diazabicyclo[4.3.0]non-5-en (DBN) und 1,8-Diazabicyclo[5.4.0]undec-7ene (DBU) (z.B. EP-A 0 803 524 oder WO 2011/115669).

Von diesen Katalysatoren erlauben die genannten bicyclischen Amidine die niedrigsten Einbrenntemperaturen. Sie führen gleichzeitig jedoch zu einer für viele Anwendungsbereiche inakzeptabel hohen Vergilbung.

Nach der Lehre der EP-A 1 137 689 werden Lewissäure-Katalysatoren, wie z.B. die vorstehend genannten Zinn- oder Zinkverbindungen, durch saure Gruppen, wie z.B. Carboxylgruppen, inhibiert. Ihre volle katalytische Aktivität können sie in einem Uretdionsystem daher nur entfalten, wenn das eingesetzte hydroxyfunktionelle Bindemittel frei von Carboxylgruppen ist. Dies lässt sich beispielsweise durch gleichzeitige Zugabe einer ausreichenden Menge eines gegenüber Carboxylgruppen reaktiven Agens, beispielsweise eines Carbodiimids oder eines Epoxids, erreichen.

In Abwesenheit von Carboxylgruppen bzw. unter Mitverwendung einer gegenüber Carboxylgruppen reaktiven Verbindung stellen auch quarternäre Ammoniumhydroxide und Ammoniumfluoride (z. B. EP-A 1 334 987), Ammoniumcarboxylate (z. B. EP-A 1 475 399, EP-A 1 522 547), Phosphoniumhydroxide, -alkoholate oder -carboxylate (z. B. WO 2005/085315) oder Metallhydroxide und -alkoholate (z. B. EP-A 1 475 400) geeignete Katalysatoren dar, mit denen sich die Aushärtetemperatur von Uretdionsystemen deutlich absenken lässt.

Gegenstand der nicht vorveröffentlichten eigenen Patentanmeldung 2018PF30286 ist die Verwendung spezieller Salze mit Imidazolium- oder Dihydroimidazolium-Struktur als Katalysatoren zur Erniedrigung der Aushärtetemperatur von Uretdionsystemen. Bei Einsatz dieser Katalysatoren reagieren Uretdione bereits im Temperaturbereich von 80 bis 100°C mit Alkoholen und/oder Thiolen praktisch vollständig zu Allophanat- bzw. Thioallophanatstrukturen ab, wobei sich gegebenenfalls in untergeordneter Menge auch Isocyanuratstrukturen bilden. Aufgrund der sehr hohen Reaktivität zeigen Beschichtungen, die unter Verwendung derart katalysierter Uretdionsysteme hergestellt wurden, allerdings nur mäßige optische Eigenschaften, insbesondere einen für viele Anwendungen unzureichenden Verlauf.

Aufgabe der vorliegenden Erfindung war es daher, neue Uretdionsystemen zur Verfügung zu stellen, die ebenfalls bei sehr niedrigen Temperaturen möglichst vollständig aushärten und dabei Beschichtungen mit gegenüber dem Stand der Technik deutlich verbesserten Verlaufseigenschaften ergeben.

Diese Aufgabe konnte durch die Bereitstellung der nachfolgend näher beschriebenen, katalysierten Uretdiongruppen enthaltenden Zusammensetzungen gelöst werden.

Die vorliegende Erfindung basiert auf der überraschenden Beobachtung, dass Uretdiongruppen enthaltende Beschichtungssysteme, die spezielle Katalysatorkombinationen aus Imidazoliumsalzen und Amidinbasen enthalten, in einem sehr niedrigen Temperaturbereich vollständig vernetzen und dabei Lackfilme ergeben, die sich gegenüber solchen, die unter alleiniger Verwendung jeweils nur eines dieser Katalysatorentypen ausgehärtet wurden, durch deutlich höhere Härte und insbesondere einen stark verbesserten Verlauf auszeichnen.

Gegenstand der vorliegenden Erfindung sind Zusammensetzungen, enthaltend
A) mindestens eine, mindestens eine Uretdiongruppe aufweisende Komponente,
B) mindestens eine, mindestens eine Hydroxylgruppe aufweisende Komponente,
C1) mindestens einen Katalysator, enthaltend ein Strukturelement der allgemeinen Formeln (I) und/oder (II) 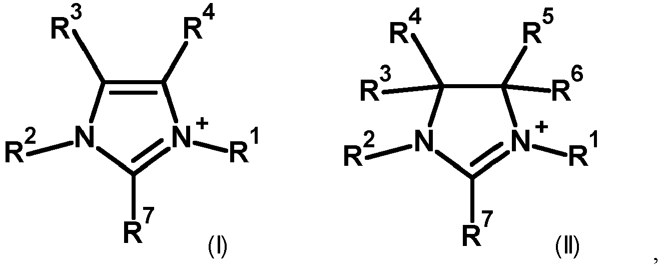 in welchen
   R¹, R², R³, R⁴, R⁵ und R⁶ unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei die Reste auch in Kombination untereinander gegebenenfalls gemeinsam mit einem weiteren Heteroatom Ringe mit 3 bis 8 Kohlenstoffatomen bilden können, die gegebenenfalls weiter substituiert sein können, wobei
   R³, R⁴, R⁵ und R⁶ unabhängig voneinander auch für Wasserstoff stehen können,und
   R⁷ für Wasserstoff oder ein Carboxylat-Anion (COO⁻) steht, und
C2) mindestens einen mindestens eine N,N,N'-trisubstituierte Amidinstruktur enthaltenden Katalysator mit einem Amidingruppengehalt (berechnet als CN₂; Molekulargewicht = 40) von 12,0 bis 40,0 Gew.-%.

Erfindungsgemäß bedeuten die Bezugnahmen auf "umfassend", "enthaltend" usw. bevorzugt "im Wesentlichen bestehend aus" und ganz besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

Bei der Uretdiongruppe aufweisenden Komponente A) handelt es sich um beliebige, gegebenenfalls isocyanatfunktionelle Uretdiongruppen enthaltende Verbindungen A1), wie sie nach an sich bekannten Methoden, beispielsweise durch Oligomerisierung monomerer Isocyanate, erhältlich sind, und/oder durch Umsetzung isocyanatfunktioneller Uretdiongruppen enthaltender Verbindungen A1) mit Alkoholen und/oder Aminen erhältliche Polyadditionsverbindungen A2).

Eine "organische Verbindung" oder "organischer Rest" enthält mindestens eine Einheit, die eine kovalente Kohlenstoff-Wasserstoff-Bindung umfasst.

Vorliegend ist der Begriff "aliphatisch" definiert als nicht-aromatische Kohlenwasserstoffgruppen, die gesättigt oder ungesättigt sind.

Vorliegend ist der Begriff "araliphatisch" definiert als Kohlenwasserstoffreste, die sowohl aus einer aromatischen als auch aus einer gesättigten oder ungesättigten Kohlenwasserstoffgruppe bestehen, die direkt an den aromatischen Rest gebunden ist.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Für den Fall, dass die Gruppen oder Verbindungen als "gegebenenfalls substituiert" oder "substituiert" offenbart werden, sind geeignete Substituenten -F, -Cl, -Br, -I, -OH, - OCH₃, -OCH₂CH₃, -O-Isopropyl oder -O-nPropyl, -OCF₃, -CF₃, -S-C₁₋₆-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), C₁₋₆-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

In einer ersten bevorzugten Ausführungsform handelt es sich bei der Komponente A) um eine isocyanatfunktionelle Uretdiongruppen enthaltende Verbindungen A1) und/oder durch Umsetzung isocyanatfunktioneller Uretdiongruppen enthaltender Verbindungen A1) mit Alkoholen und/oder Aminen erhältliche Polyadditionsverbindungen A2).

Geeignete Isocyanate zur Herstellung der Uretdiongruppen enthaltenden Verbindungen A1) sind beliebige, auf verschiedene Weise, beispielsweise durch Phosgenierung in der Flüssig- oder Gasphase oder auf phosgenfreien Weg, wie z. B. durch thermische Urethanspaltung, zugängliche Mono-, Di- und Triisocyanate mit aliphatisch, cycloaliphatisch, araliphatisch und/oder aromatisch gebundenen Isocyanatgruppen.

Bevorzugte Monoisocyanate sind solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat.

Bevorzugte Diisocyanate sind solche des Molekulargewichtsbereichs 140 bis 400, wie z.B. 1,4-Diisocyanatobutan, 1,5-Diisocyanatopentan (Pentamethylendiisocyanat, PDI), 1,6-Diisocyanatohexan (Hexamethylendiisocyanat, HDI), 2-Methyl-1,5-diisocyanatopentan, 1,5-Diisocyanato-2,2-dimethyl-pentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1,3-Diisocyanato-2(4)-methylcyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H₁₂-MDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-Isocyanato-1-methyl-4(3)isocyanato-methylcyclohexan, Bis-(isocyanatomethyl)-norbornan (NBDI), 1,3-und 1,4-Bis(isocyanatomethyl)benzol (Xylylendiisocyanat, XDI), 1,3- und 1,4-Bis(2-isocyanatopropan-2-yl)benzol (Tetramethylxylylendiisocyanat, TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (Toluylendiisocyanat, TDI), 2,3,5,6-Tetramethyl-1,4-diisocyanatobenzol, die isomeren Diethylphenylendiisocyanate, Diisopropylphenylendiisocyanate, Diisododecylphenylendiisocyanate und Biphenyldiisocyanate, 3,3'-Dimethoxybiphenyl-4,4'-diisocyanat, 2,2'-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat oder 2,4-Diisocyanato-1-[(5-isocyanato-2-methylphenyl)methyl]benzol.

Weitere ebenfalls geeignete Diisocyanate finden sich darüber hinaus beispielsweise in Justus Liebigs Annalen der Chemie Band 562 (1949) S. 75 - 136.

Als besonders geeignetes Triisocyanat sei beispielhaft 4-Isocyanatomethyl-1,8-octandiisocyanat (Triisocyanatononan; TIN) genannt.

Zur Herstellung der Uretdiongruppen enthaltenden Verbindungen A1) können auch Mischungen aus mindestens zwei solcher Mono-, Di- und/oder Triisocyanate zum Einsatz kommen.

Bevorzugt kommen zu Herstellung der Uretdiongruppen enthaltenden Verbindungen A1) monomere Diisocyanate zum Einsatz.

Besonders bevorzugt ist die Verwendung von PDI, HDI, IPDI, XDI, NBDI und/oder H₁₂-MDI.

Die Herstellung der Uretdiongruppen enthaltenden Verbindungen A1) kann nach unterschiedlichen Methoden erfolgen, denen im Allgemeinen die üblichen literaturbekannten Verfahren zur Oligomerisierung einfacher Diisocyanate zugrunde liegen, wie sie beispielsweise in J. Prakt. Chem. 336 (1994) 185 - 200, der DE-A 16 70 666, DE-A 19 54 093, DE-A 24 14 413, DE-A 24 52 532, DE-A 26 41 380, DE-A 37 00 209, DE-A 39 00 053, DE-A 39 28 503, EP-A 336 205, EP-A 339 396 und EP-A 798 299 beschrieben sind.

Die Uretdiongruppen enthaltenden Verbindungen A1) können bei ausschließlicher Verwendung oder anteiliger Mitverwendung von Monoisocyanaten frei von Isocyanatgruppen sein. Vorzugsweise kommen zu ihrer Herstellung jedoch zumindest zusätzlich Di- und/oder Triisocyanate in solchen Mengen zum Einsatz, dass Uretdiongruppen enthaltende Verbindungen A1) erhalten werden, die eine mittlere NCO-Funktionalität von mindestens 1,6, vorzugsweise von 1,8 bis 3,5, besonders bevorzugt von 1,9 bis 3,2, ganz besonders bevorzugt von 2,0 bis 2,7 aufweisen.

Bei mittleren NCO-Funktionalitäten von > 2,0 liegen in diesen isocyanatfunktionellen Uretdiongruppen enthaltenden Verbindungen A1) neben linearen difunktionellen Uretdionstrukturen noch weitere, mindestens trifunktionelle Polyisocyanatmoleküle vor. Bei diesen höherfunktionellen Bestandteilen der Verbindungen A1) handelt es sich insbesondere um die bekannten Folgeprodukte von Diisocyanaten mit Isocyanurat-, Allophanat-, Biuret-, Urethan- und/oder Iminooxadiazindionstruktur.

Die Uretdiongruppen enthaltenden Verbindungen A1) werden im allgemeinen unmittelbar im Anschluss an ihre oben beschriebene Herstellung durch Modifizierung einfacher monomerer Mono-, Di- und/oder Triisocyanate nach bekannten Methoden, beispielsweise durch Dünnschichtdestillation oder Extraktion, vom nicht umgesetzten Monomerüberschuss befreit. Sie weisen daher in der Regel Restgehalte an monomeren Diisocyanaten von weniger als 5 Gew.-%, vorzugsweise weniger als 2 Gew.-%, besonders bevorzugt weniger als 1 Gew.-%, auf.

Unabhängig vom gewählten Herstellverfahren weisen die Uretdiongruppen enthaltenden Verbindungen A1) im Allgemeinen einen Gehalt an Uretdionstrukturen (berechnet als C₂N₂O₂, Molekulargewicht = 84) von 10 bis 25 Gew.-%, vorzugsweise von 12 bis 23 Gew.-%, besonders bevorzugt von 14 bis 20 Gew.-% auf.

In einer weiteren bevorzugten Ausführungsform handelt es sich bei der Komponente A1) um Uretdiongruppen enthaltende Verbindungen auf Basis von PDI, HDI, IPDI, XDI, NBDI und/oder H₁₂-MDI handelt, die bevorzugt eine mittlere NCO-Funktionalität von mindestens 1,6 aufweisen und besonders bevorzugt einen Gehalt an Uretdionstrukturen (berechnet als C₂N₂O₂, Molekulargewicht = 84) von 10 bis 25 Gew.-% aufweisen.

Als Uretdiongruppen aufweisende Komponente A) der erfindungsgemäßen Zusammensetzungen ebenfalls geeignet sind Polyadditionsverbindungen A2), wie sie sich durch Umsetzung zumindest eines Teils der freien Isocyanatgruppen der vorstehend beschriebenen isocyanatfunktionellen Uretdiongruppen enthaltenden Verbindungen A1) mit Alkoholen und/oder Aminen erhalten lassen.

Geeignete Alkohole zur Herstellung der Polyadditionsverbindungen A2) sind beispielsweise einfache aliphatische bzw. cycloaliphatische Monoalkohole, wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole und Hydroxymethylcyclohexan, Etheralkohole, wie 2-Methoxyethanol, 2-Ethoxyethanol, 2-Propoxyethanol, 2-Butoxyethanol, Diethylenglykolmonomethylether, Diethylenglykolmonoethylether, Diethylenglykolmonobutylether, 3-Methoxy-1-butanol und Glycerin-1,3-diethylether, Esteralkohole, wie Hydroxyethylacetat, Butylglycolat, Ethyllactat, Glycerindiacetat oder solche, wie sie sich durch Umsetzung der genannten Monoalkohole mit Lactonen erhalten lassen oder Etheralkohole, wie sie sich durch Umsetzung der genannten Monoalkohole mit Alkylenoxiden, insbesondere Ethylenoxid und/oder Propylenoxid, erhalten lassen.

Ebenfalls geeignete Alkohole zur Herstellung der Polyadditionsverbindungen A2) sind beliebige mindestens difunktionellen Polyole des Molekulargewichtsbereiches 62 bis 22000, vorzugsweise solche, die eine mittlere Funktionalität von 2 bis 6 und ein zahlenmittleres Molekulargewicht von 62 bis 18000, besonders bevorzugt eine mittlere Funktionalität von 2 bis 4 und ein zahlenmittleres Molekulargewicht von 90 bis 12000, aufweisen.

Geeignete Polyole zur Herstellung der Polyadditionsverbindungen A2) sind beispielsweise einfache mehrwertige Alkohole mit 2 bis 14, vorzugsweise 4 bis 10 Kohlenstoffatomen, wie z. B. 1,2-Ethandiol, 1,2- und 1,3-Propandiol, die isomeren Butandiole, Pentandiole, Hexandiole, Heptandiole und Octandiole, 1,9-Nonandiol, 1,10-Decandiol, 1,12-Dodecandiol, 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydro-bisphenol), 1,2,3-Propantriol, 1,2,4-Butantriol, 1,1,1-Trimethylolethan, 1,2,6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, 3(4),8(9)-Bis-(hydroxymethyl)-tricyclo-[5.2.1.0^{2,6}]decane, Di-Trimethylolpropan, 2,2-Bis(hydroxymethyl)-1,3-propandiol (Pentaerythrit), 2,2,6,6-Tetrakis(hydroxymethyl)-4-oxa-heptan-1,7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsäureneopentylglykolester.

Geeignete Polyole zur Herstellung der Polyadditionsverbindungen A2) sind auch die üblichen aus der Polyurethanchemie bekannten polymeren Polyetherpolyole, Polyesterpolyole, Polycarbonatpolyole und/oder Polyacrylatpolyole, die üblicherweise ein zahlenmittleres Molekulargewicht von 200 bis 22000, vorzugsweise von 250 bis 18000, besonders bevorzugt von 250 bis 12000 aufweisen. Ein breiter Überblick über geeignete polymere Polyole zur Herstellung der Polyadditionsverbindungen A2) findet sich beispielsweise in N. Adam et al. Polyurethanes. In: Ullmann's Encyclopedia of Industrial Chemistry, Wiley-VCH Verlag GmbH & Co. KgaA; 2005. URL: https://doi.org/10.1002/14356007.a21_665.pub2. Geeignete Polyetherpolyole sind beispielsweise solche der in der DE 26 22 951 B, Spalte 6, Zeile 65 bis Spalte 7, Zeile 26, der EP-A 0 978 523 Seite 4, Zeile 45 bis Seite 5, Zeile 14 oder der WO 2011/069966, Seite 4, Zeile 20 bis Seite 5, Zeile 23 genannten Art, sofern sie den oben gemachten Angaben hinsichtlich Funktionalität und Molekulargewicht entsprechen. Besonders bevorzugte Polyetherpolyole sind Anlagerungsprodukte von Ethylenoxid und/oder Propylenoxid an 1,2-Propandiol, 1,3-Propandiol, Glycerin, Trimethylolpropan, Ethylendiamin und/oder Pentaerythrit oder die beispielsweise gemäß Angew. Chem. 72, 927 (1960) (https://doi.org/10.1002/ange.19600722402) durch Polymerisation von Tetrahydrofuran erhältlichen Polytetramethylenetherglykole mit zahlenmittleren Molekulargewichten von 400 g/mol bis 4000 g/mol.

Geeignete Polyesterpolyole sind beispielsweise solche der in der EP-A 0 978 523, Seite 5, Zeilen 17 bis 47 oder der EP-A 0 659 792, Seite 6, Zeilen 32 bis 45 genannten Art, sofern sie den oben gemachten Angaben hinsichtlich Funktionalität und Molekulargewicht entsprechen. Besonders bevorzugte Polyesterpoylole sind Kondensationsprodukte mehrwertiger Alkohole, wie z. B. 1,2-Ethandiol, 1,2-Propandiol, Diethylenglykol, 1,4-Butandiol, 1,6-Hexandiol, Neopentylglykol, 1,4-Cyclohexandimethanol, 1,4-Cyclohexandiol, Perhydrobisphenol, 1,1,1-Trimethylolpropan, 1,2,3-Propantriol, Pentaerythrit und/oder Sorbitol, mit unterschüssigen Mengen an mehrwertigen Carbonsäuren bzw. Carbonsäureanhydriden, wie z. B. Bernsteinsäure, Adipinsäure, Sebazinsäure, Dodecandisäure, Glutarsäureanhydrid, Maleinsäureanhydrid, Phthalsäureanhydrid, Isophthalsäure, Terephthalsäure, Trimellitsäure Hexahydrophthalsäureanhydrid und/oder Tetrahydrophthalsäureanhydrid, oder solche, wie sie in an sich bekannter Weise aus Lactonen, wie z. B. ε-Caprolacton, und einfachen mehrwertigen Alkoholen, wie z. B. den oben beispielhaft genannten, als Startermolekülen unter Ringöffnung erhältlich sind.

Geeignete Polycarbonatpolyole sind insbesondere die an sich bekannten Umsetzungsprodukte zweiwertiger Alkohole, beispielsweise solcher, wie sie oben in der Liste der mehrwertigen Alkohole beispielhaft genannt sind, mit Diarylcarbonaten, wie z. B. Diphenylcarbonat, Dimethylcarbonat oder Phosgen. Ebenfalls geeignete Polycarbonatpolyole sind solche, die neben Carbonatstrukturen zusätzlich Estergruppen enthalten. Hierbei handelt es sich insbesondere um die an sich bekannten Polyestercarbonatdiole, wie sie beispielsweise gemäß der Lehre der DE-AS 1 770 245 durch Umsetzung zweiwertiger Alkohole mit Lactonen, wie insbesondere ε-Caprolacton, und anschließende Reaktion der dabei entstehenden Polyesterdiole mit Diphenyl- oder Dimethylcarbonat erhalten werden können.

Geeignete Polyacrylatpolyole sind beispielsweise solche der in WO 2011/124710 Seite 10, Zeile 32 bis Seite 13, Zeile 18 genannten Art, sofern sie den oben gemachten Angaben hinsichtlich Funktionalität und Molekulargewicht entsprechen. Besonders bevorzugte Polyacrylatpolyole sind Polymerisate bzw. Copolymerisate von Hydroxyalkylestern der Acrylsäure oder Methacrylsäure, wie z. B. Hydroxyethyl(meth)acrylat, Hydroxypropyl(meth)acrylat oder Hydroxybutyl(meth)acrylat, gegebenenfalls gemeinsam mit Acrylsäurealkylestern und/oder Methacrylsäurealkylestern, wie z. B. Methyl(meth)acrylat, Ethyl(meth)acrylat, n-Butyl(meth)acrylat, iso-Butyl(meth)acrylat, 2-Ethylhexyl(meth)acrylat, Cyclohexyl(meth)acrylat, Isobornyl(meth)acrylat, Lauryl(meth)acrylat, Styrol oder anderen copolymerisierbaren olefinisch ungesättigten Monomeren, wie z. B. Acrylsäure, Methacrylsäure oder Maleinsäuredimethylester.

Geeignete Polyole sind beispielsweise auch die bekannten, durch Umsetzung einfacher Glykole, wie z. B. Diethylenglykol, Triethylenglykol, 4,4'-Dioxethoxy-diphenyldimethylmethan (Addukt von 2 mol Ethylenoxid an Bisphenol A) oder Hexandiol, mit Formaldehyd erhältlichen Polyacetalpolyole oder auch durch Polykondensation cyclischer Acetale, wie z. B. Trioxan, hergestellte Polyacetale.

Weitere geeignete Polyole zur Herstellung der Polyadditionsverbindungen A2) sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole ebenso wie Hydroxylgruppen enthaltende Polybutadiene.

Geeignete Amine zur Herstellung der Polyadditionsverbindungen A2) sind beispielsweise einfache aliphatische bzw. cycloaliphatische Monoamine, wie z. B. Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine sowie Aminomethylcyclohexan, sekundäre Monoamine, wie Dimethylamin, Diethylamin, Dipropylamin, Diisopropylamin, Dibutylamin, Diisobutylamin, Bis(2-ethylhexyl)-amin, N-Methyl- und N-Ethylcyclohexylamin sowie Dicyclohexylamin.

Geeignete Amine sind auch beliebige aliphatische und cycloaliphatische Amine mit mindestens zwei primär und/oder sekundär gebundenen Aminogruppen, wie z. B. 1,2-Diaminoethan, 1,2-Diaminopropan, 1,3-Diaminopropan, 1,4-Diaminobutan, 1,2-Diamino-2-methylpropan, 1,5-Diaminopentan, 1,3-Diamino-2,2-dimethylpropan, 1,6-Diaminohexan, 1,5-Diamino-2-methylpentan, 1,6-Diamino-2,2,4-trimethylhexan, 1,6-Diamino-2,4,4-trimethylhexan, 1,7-Diaminoheptan, 1,8-Diaminooctan, 2,5-Diamino-2,5-dimethylhexan, 1,9-Diaminononan, 2-Methyl-1,8-diaminooctan, 1,10-Diaminodecan, 1,11-Diaminoundecan, 1,12-Diaminododecan, 1,2-Diaminocyclopentan, 1,2-Diaminocyclohexan, 1-Amino-3,3,5-trimethyl-5-aminomethylcyclohexan (Isophorondiamin, IPDA), 3(4)-Aminomethyl-1-methylcyclohexylamin, 1,3-Diamino-2- und/oder -4-methylcyclohexan, Isopropyl-2,4- und/oder 2,6-diaminocyclohexan, 1,3-Bis(aminomethyl)-cyclohexan, 1,8-p-Diaminomenthan, Bis(4-aminocyclohexyl)-methan, Bis(4-amino-3-methylcyclohexyl)-methan, Bis(4-amino-3,5-dimethylcyclohexyl)-methan, Bis(4-amino-2,3,5-trimethylcyclohexyl)-methan, 1,1-Bis(4-aminocyclohexyl)-propan, 2,2-Bis(4-aminocyclohexyl)-propan, 1,1-Bis(4-aminocyclohexyl)-ethan, 1,1-Bis(4-aminocyclohexyl)-butan, 2,2-Bis(4-aminocyclohexyl)-butan, 1,1-Bis(4-amino-3-methylcyclohexyl)-ethan, 2,2-Bis(4-amino-3-methylcyclohexyl)-propan, 1,1-Bis(4-amino-3,5-dimethylcyclohexyl)-ethan, 2,2-Bis(4-amino-3,5-dimethylcyclohexyl)-propan, 2,2-Bis(4-amino-3,5-dimethylcyclohexyl)-butan, 2,4-Diaminodicyclohexylmethan, 4-Aminocyclohexyl-4-amino-3-methylcyclohexyl-methan, 4-Amino-3,5-dimethylcyclohexyl-4-amino-3-methylcyclohexyl-methan und 2-(4-Aminocyclohexyl)-2-(4-amino-3-methylcyclohexyl)-methan, Tetrahydrofurandimethanamin, 3S,3aR,6S,6aR-Hexahydrofuro[3,2-b]furan-3,6-diamin, 3R,3aR,6S,6aR-Hexahydrofuro[3,2-b]furan-3,6-diamin, 3S,3aR,6S,6aR-6-(aminomethyl)-hexahydrofuro[3,2-b furan-3-yl]-methanamin, m-Xylylendiamin, Methyliminobispropylamin, Iminobispropylamin, Bis(6-aminohexyl)-amin, N,N-Bis(3-aminopropyl)-ethylendiamin, 4-Aminomethyl-1,8-octandiamin, Bis(aminopropyl)piperazin, Aminoethylpiperazin, Diethylentriamin, Dipropylentriamin, Triethylentetramin, Tetraethylenpentamin, Pentaethylenhexamin, Heptaethylenoctamin.

Geeignete Amine sind auch aminofunktionelle Polyalkylenglykole, wie z. B. 1,2-Bis(aminoethoxy)-ethan, 1,11-Diamino-3,6,9-trioxaundecan, 1,13-Diamino-4,7,10-trioxatride-can und insbesondere die unter dem Handelsnamen Jeffamine^{®} von Firma Huntsman Corp. kommerziell vertriebenen aminfunktionalisierten Polyalkylenglykole mit zahlenmittleren Molekulargewichten bis zu 5000, bevorzugt bis zu 2000, besonders bevorzugt bis zu 1000.

Gegebenenfalls können auch sterisch gehinderte aliphatische Diamine mit zwei sekundär gebundenen Aminogruppen zur Herstellung der Polyadditionsverbindungen A2) eingesetzt werden, wie z. B. die aus EP-A 0 403 921 bekannten Umsetzungsprodukte aliphatischer und/oder cycloaliphatischer Diamine mit Maleinsäure- oder Fumarsäureestern, das gemäß der Lehre der EP-A 1 767 559 erhältliche Bisaddukt von Acrylnitril an Isophorondiamin oder die beispielsweise in der DE-A 19 701 835 beschriebenen Hydrierungsprodukte aus aliphatischen und/oder cycloaliphatischen Diaminen und Ketonen, wie z. B. Diisopropylketon, zugänglicher Schiffscher Basen.

Weitere geeignete Polyamine sind darüberhinaus auch die als Vernetzerkomponenten für Epoxyharze bekannten Polyamidoamine, Polyimine und/oder Polyvinylamine.

Zur Herstellung der Polyadditionsverbindungen A2) sind schließlich auch Aminoalkohole, wie z. B. 2-Aminoethanol, die isomeren Aminopropanole und -butanole, 3-Amino-1,2-propandiol und 1,3-Diamino-2-propanol, geeignet.

Bei der Herstellung der Polyadditionsverbindungen A2) aus den isocyanatfunktionellen Uretdiongruppen enthaltenden Verbindungen A1) kommen die genannten Alkohole und/oder Amine entweder einzeln oder als Mischungen aus mindestens zwei solcher Alkohole und/oder Amine zum Einsatz.

Die Herstellung der Uretdiongruppen enthaltenden Polyadditionsverbindung A2) kann nach unterschiedlichen Methoden erfolgen, beispielsweise den literaturbekannten Verfahren zur Herstellung von Polyuretdionzusammensetzungen, wie sie z.B. in WO 99/11690 und WO 2011/115669 beispielhaft beschrieben sind.

Dabei können neben den isocyanatfunktionellen Uretdiongruppen enthaltenden Verbindungen A1) gegebenenfalls weitere monomere Isocyanate der oben genannten Art, und/oder oligomere Polyisocyanate, vorzugsweise solche mit Isocyanurat-, Biuret-, Iminooxadazindion-, Allophanat- und/oder Urethan-Struktur, in einer Menge von bis zu 30 Gew.-%, bezogen auf das Gesamtgewicht aller Reaktionspartner (umfassend die isocyanatfunktionellen Uretdiongruppen enthaltenden Verbindungen A1), Alkohole und/oder Amine) mitverwendet werden.

Die Umsetzung erfolgt vorzugsweise unter Einhaltung eines Äquivalentverhältnisses von Isocyanatgruppen zu gegenüber Isocyanaten reaktiven Gruppen von 2 : 1 bis 0,5 : 1, vorzugsweise von 1,5 : 1 bis 0,7 : 1, besonders bevorzugt von 1 : 1 bis 0,9 : 1.

In einer weiteren bevorzugten Ausführungsform handelt es sich bei den Polyadditionsverbindungen A2) um Verbindungen, die durch Umsetzung isocyanatfunktioneller, Uretdiongruppen enthaltender Verbindungen A1) mit mindestens difunktionellen Polyolen des Molekulargewichtsbereiches 62 bis 22000 und gegebenenfalls Monoalkoholen unter Einhaltung eines Äquivalentverhältnisses von Isocyanatgruppen zu gegenüber Isocyanaten reaktiven Gruppen von 2 : 1 bis 0,5 : 1 hergestellt werden.

Die Umsetzung kann lösemittelfrei oder in einem geeigneten gegenüber Isocyanatgruppen inerten Lösungsmittel durchgeführt werden.

Geeignete Lösemittel zur Herstellung der Polyadditionsverbindungen A2) sind insbesondere solche, die sich gegenüber den Isocyanatgruppen der Verbindung A1) inert verhalten, beispielsweise die bekannten üblichen aprotischen Lacklösemittel wie z. B. Ethylacetat, Isopropylacetat, Butylacetat, Isobutylacetat, Amylacetat, 2-Ethylhexylacetat, Ethylenglykolmonomethyletheracetat, Ethylenglykolmonoethyletheracetat, Ethylenglykolmonobutyletheracetat, 1-Methoxypropyl-2-acetat, 3-Methoxy-n-butylacetat, Aceton, Diethylketon, 2-Butanon, 4-Methyl-2-pentanon, Diisobutylketon Cyclohexanon, Cyclohexan, Toluol, Xylol, Chlorbenzol, Dichlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, Ethylethoxypropionat, Propylencarbonat, N-Methylpyrrolidon und N-Methylcaprolactam, Dioxan, Tetrahydrofuran oder beliebige Gemische solcher Lösemittel.

Die Umsetzung der isocyanatfunktionellen Uretdiongruppen enthaltenden Verbindungen A1) mit den Alkoholen und/oder Aminen zur Uretdiongruppen enthaltenden Polyadditionsverbindungen A2) kann unkatalysiert erfolgen. Zur Reaktionsbeschleunigung können aber auch übliche aus der Polyurethanchemie bekannte Katalysatoren zum Einsatz kommen. Beispielhaft seien hier genannt tertiäre Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undec-7-en, 1,2-Dimethylimidazol, 2-Methylimidazol, N,N-Dimethylimidazol-β-phenylethylamin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N', N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-acetat, Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutyldilaurylzinnmercaptid, oder Bleioctoat; Amidine, wie z. B. 2,3-Dimethyl-3,4,5,6-tetrahydropyrimidin; Tetraalkylammoniumhydroxide, wie z. B. Tetramethylammoniumhydroxid; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugte Katalysatoren sind tertiäre Amine, Wismuth- und Zinnverbindungen der genannten Art.

Unabhängig von der Art ihrer Herstellung weisen die Uretdiongruppen enthaltenden Polyadditionsverbindungen A2) in lösemittelfreier Form in einer bevorzugten Ausführungsform einen Gehalt an freien Isocyanatgruppen von weniger als 5 Gew.-%, vorzugsweise von weniger als 2 Gew.-% und besonders bevorzugt von weniger als 1 Gew.-% auf. Ganz besonders bevorzugt sind isocyanatgruppenfreie Polyadditionsverbindungen A2).

In den erfindungsgemäßen Zusammensetzungen wird die Uretdiongruppen aufweisende Komponente A) mit einer mindestens eine Hydroxylgruppe aufweisenden Komponente B) als Reaktionspartner kombiniert.

Bei der Komponente B) handelt es sich beispielsweise um die oben bei der Herstellung der Polyadditionsverbindung A2) als geeignete Alkohole genannten Verbindungen, insbesondere mindestens difunktionelle Polyole des Molekulargewichtsbereiches 62 bis 22000.

Geeignete hydroxyfunktionellen Komponenten B) sind vorzugsweise die dort genannten einfachen mehrwertigen Alkohole mit 2 bis 14 Kohlenstoffatomen, niedermolekulare Ether- und Esteralkohole sowie die üblichen aus der Polyurethanchemie bekannten polymeren Polyetherpolyole, Polyesterpolyole, Polycarbonatpolyole und/oder Polyacrylatpolyole.

Nach einer weiteren bevorzugten Ausführungsform kommen in den erfindungsgemäßen Zusammensetzungen die mindestens eine, mindestens eine Uretdiongruppe aufweisende Komponente A) und die mindestens eine, mindestens eine Hydroxylgruppe aufweisende Komponente B) in solchen Mengen zum Einsatz, dass auf jede Uretdiongruppe der Komponente A) 0,5 bis 2,0, vorzugsweise 0,7 bis 1,5, besonders bevorzugt 0,8 bis 1,2, ganz besonders bevorzugt genau eine Hydroxylgruppe der Komponente B) entfällt.

Zur Beschleunigung der Reaktion zwischen den Uretdiongruppen der Komponente A) und den Hydroxylgruppen der Komponente B) wird in den erfindungsgemäßen Zusammensetzungen eine Kombination aus mindestens einem salzartigen Katalysator C1) mit einem Imidazolium und/oder Imidazolinium-Kation und mindestens einem N,N,N'-trisubstituierte Amidinstrukturen enthaltenden Katalysator C2) eingesetzt.

Als Katalysatoren C1) geeignete Verbindungen sind als ionische Flüssigkeiten vom Imidazolium- und Imidazoliniumtyp bekannt und werden beispielsweise als Lösemittel in der chemischen Synthese eingesetzt. Verfahren zu ihrer Herstellung sind beispielsweise in Chem. Rev. 99, 8, 2071-2084 und WO 2005/070896, beschrieben.

Bei den Katalysatoren C1) handelt es sich um salzartige Verbindungen, enthaltend ein Strukturelement der allgemeinen Formeln (I) oder (II) 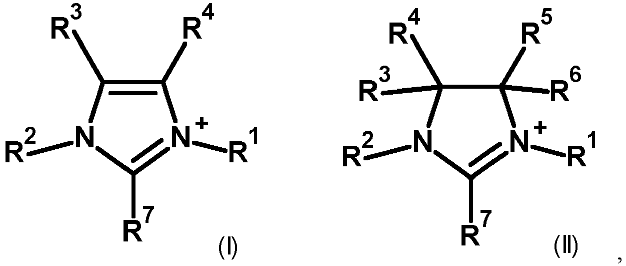 in welchen
- R¹, R², R³, R⁴, R⁵ und R⁶: unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei die Reste auch in Kombination untereinander gegebenenfalls gemeinsam mit einem weiteren Heteroatom Ringe mit 3 bis 8 Kohlenstoffatomen bilden können, die gegebenenfalls weiter substituiert sein können,
- R³, R⁴, R⁵ und R⁶: unabhängig voneinander auch für Wasserstoff stehen können, und
- R⁷: für Wasserstoff oder ein Carboxylat-Anion (COO⁻) steht.

Bevorzugte Katalysatoren C1) sind salzartige Verbindungen, enthaltend ein Strukturelement der allgemeinen Formeln (I) oder (II), in welchen
- R¹ und R²: unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 12 Kohlenstoffatomen bedeuten, die substituiert oder unsubstituiert sind und/oder Heteroatome in der Kette aufweisen,
- R³, R⁴, R⁵ und R⁶: für Wasserstoff stehen, und wobei
- R⁷: für Wasserstoff oder ein Carboxylat-Anion (COO⁻) steht.

Besonders bevorzugte Katalysatoren C1) sind salzartige Verbindungen, enthaltend ein Strukturelement der allgemeinen Formeln (I) oder (II), in welchen
- R¹ und R²: unabhängig voneinander für gleiche oder verschiedene Reste stehen, die gesättigte oder ungesättigte, lineare oder verzweigte, aliphatische organische Reste mit 1 bis 12 Kohlenstoffatomen bedeuten,
- R³, R⁴, R⁵ und R⁶: für Wasserstoff stehen, und
- R⁷: für Wasserstoff oder ein Carboxylat-Anion (COO⁻) steht.

Als geeignete Katalysatoren der allgemeinen Formel (I) seien beispielhaft solche genannt, die ein 1,3-Dimethylimidazolium-, 1-Methyl-3-ethylimidazolium-, 1-Methyl-3-propylimidazolium-, 1-Methyl-3-butylimidazolium-, 1-Methyl-3-pentylimidazolium-, 1-Methyl-3-hexylimidazolium-, 1-Methyl-3-octylimidazolium-, 1-Methyl-3-nonylimidazolium-, 1-Methyl-3-decylimidazolium-, 1-Decyl-3-methylimidazolium-, 1-Methyl-3-benzylimidazolium-, 1-Methyl-3-(3-phenylpropyl)imidazolium-, 1-Ethyl-3-methylimidazolium (EMIM)-, 1-Isopropyl-3-methylimidazolium-, 1-Butyl-3-methylimidazolium (BMIM)-, 1-Hexyl-3-methylimidazolium-, 1-Heptyl-3-methylimidazolium-, 1-(2-Ethyl)hexyl-3-methylimidazolium (OMIM)-, 1,3-Bis(tert-butyl)-imidazolium-, 1,3-Bis(2,4,6-trimethylphenyl)imidazolium- oder 1,3-Dimethylbenzimidazolium-Kation enthalten.

Als geeignete Katalysatoren der allgemeinen Formel (II) seien beispielhaft solche genannt, die ein 1,3-Dimethylimidazolinium-, 1-Ethyl-3-methylimidazolinium-, 1-Butyl-3-methylimidazolium- 1,3-Bis-(2,6-diisopropylphenyl)imidazolinium- oder 1,3-Bis(2,4,6-trimethylphenyl)imidazolinium-1-(1-Adamantyl)-3-(2,4,6-trimethylphenyl)imidazolinium-, 1,3-Diphenyl-4,4,5,5-tetramethylimidazolinium-, 1,3-Di-o-tolyl-4,4,5,5-tetramethylimidazolinium Kation enthalten.

Als Gegenion zu den Imidazolium- und Imidazolinium-Kationen enthalten die in den erfindungsgemäßen Zusammensetzungen vorliegenden Katalysatoren C1) beliebige anorganische und/oder organische Anionen, wie z. B. Halogenid-, Sulfat-, Hydroxysulfat-, Sulfit-, Nitrat-, Carbonat-, Hydrogencarbonat-, Arylsulfonat-, Alkylsulfonat-, Trifluormethylsulfonat-, Alkylsulfat-, Phosphat-, Dialkylphosphat-, Hexafluorophosphat-, Trifluormethylborat-, Tetrafluoroborat-, Bis(trifluoromethylsulfonyl)imid-, Dicyanamid- und/oder Carboxylat-Anionen.

Das Gegenion zu den Imidazolium- und Imidazolinium-Kationen kann daneben auch eine Carboxylatgruppe (COO⁻) darstellen, die als R⁷ der allgemeinen Formel (I) direkt am Imidazolium-Kation gebunden vorliegt, wobei der Katalysator C1) in diesem Fall in Form einer zwitterionischen Struktur aufweist.

Geeignete Katalysatoren C1) für die erfindungsgemäßen Zusammensetzungen sind beispielsweise 1,3-Dimethylimidazoliumchlorid, 1,3-Dimethylimidazolium-2-carboxylat, 1,3-Dimethylimidazoliumdimethylphosphat, 1-Ethyl-3-methylimidazoliumchlorid, 1-Ethyl-3-methylimidazoliumbromid, 1-Ethyl-3-methylimidazoliumiodid, 1-Ethyl-3-methylimidazoliumnitrat, 1-Ethyl-3-methylimidazoliumhydrogencarbonat, 1-Ethyl-3-methylimidazoliummethansulfonat, 1-Ethyl-3-methylimidazoliumtrifluoromethansulfonat, 1-Ethyl-3-methylimidazoliumtrifluoro(trifluoromethyl)borat, 1-Ethyl-3-methylimidazoliumhydrogensulfat, 1-Ethyl-3-methylimidazoliumethylsulfat, 1-Ethyl-3-methylimidazoliumdicyanamid, 1-Ethyl-3-methylimidazoliumtetrafluoroborat, 1-Ethyl-3-methylimidazoliumdiethylphosphat, 1-Ethyl-3-methylimidazoliumhexafluorophosphat, 1-Ethyl-3-methylimidazolium-bis(trifluoromethansulfonyl)imid, 1-Ethyl-3-methylimidazolium-2-carboxylat, 1-Ethyl-3-methylimidazoliumacetat, 1-Ethyl-3-methylimidazoliumpivalat, 1-Ethyl-3-methylimidazolium-(L)-(+)-lactat, 1-Methyl-3-propylimidazoliumiodid, 1,3-Diisopropyl-4,5-dimethylimidazolium-2-carboxylat, 1-Butyl-3-methylimidazoliumchlorid, 1-Butyl-3-methylimidazoliumbromid, 1-Butyl-3-methylimidazoliumiodid, 1-Butyl-3-methylimidazoliumtrifluoromethansulfonat, 1-Butyl-3-methylimidazoliumethylsulfat, 1-Butyl-3-methylimidazolium-n-octylsulfat, 1-Butyl-3-methylimidazoliumdicyanamid, 1-Butyl-3-methylimidazoliumtrifluoro(trifluoromethyl)borat, 1-Butyl-3-methylimidazoliumtetrafluoroborat, 1-Butyl-3-methylimidazoliumdibutylphosphat, 1-Butyl-3-methylimidazoliumhexafluorophosphat, 1-Butyl-3-methylimidazolium-2-carboxylat, 1-Butyl-3-methylimidazoliumacetat, Butyl-3-methylimidazoliumpivalat 1-Butyl-3-methylimidazolium-bis(trifluoromethansulfonyl)imid, Bis(tert-butyl)-imidazolium-2-carboxylat, 1-Hexyl-3-methylimidazoliumchlorid, 1-Hexyl-3-methylimidazoliumbromid, 1-Hexyl-3-methylimidazoliumtetrafluoroborat, 1-Hexyl-3-methylimidazoliumbis(trifluoromethansulfonyl)imid, 1-Hexyl-3-methylimidazoliumhexafluorophosphat, 1-Methyl-3-n-octylimidazoliumbromid, 1-Methyl-3-n-octylimidazoliumchlorid, 1-Methyl-3-n-octylimidazoliumhexafluorophosphat, 1-Decyl-3-methylimidazolium-bis(trifluoromethansulfonyl)imid, 1,3-Dimethylimidazoliniumchlorid, 1,3-Dimethylimidazolinium-2-carboxylat, 1,3-Dimethylimidazoliniumacetat, 1-Ethyl-3-methylimidazoliniumchlorid, 1-Ethyl-3-methylimidazolinium-2-carboxylat, 1-Ethyl-3-methylimidazoliniumacetat, 1-Butyl-3-methylimidazolinium-2-carboxylat, 1,3-Bis-(2,6-diisopropylphenyl)imidazoliniumchlorid oder 1,3-Bis(2,4,6-trimethylphenyl)imidazolinium-1-(1-Adamantyl)-3-(2,4,6-trimethylphenyl)imidazoliniumchlorid und/oder 1,3-Diphenyl-4,4,5,5-tetramethylimidazoliniumchlorid.

Besonders bevorzugte Katalysatoren C1) sind Imidazoliumsalze der genannten Art mit Carboxylat-Anionen, ganz besonders bevorzugt 1,3-Dimethylimidazolium-2-carboxylat, 1-Ethyl-3-methylimidazolium-2-carboxylat, 1-Ethyl-3-methylimidazoliumacetat, 1-Ethyl-3-methylimidazoliumpivalat, 1-Butyl-3-methylimidazolium-2-carboxylat und/oder 1-Butyl-3-methylimidazoliumacetat.

Bei den Katalysatoren C2) handelt es sich um N,N,N'-trisubstituierte Amidinstrukturen enthaltende Verbindungen mit einem Gehalt an Amidingruppen (berechnet als CN₂; Molekulargewicht = 40) von 12,0 bis 47,0 Gew.-%, vorzugsweise von 15,0 bis 40,0 Gew.-%. Geeignete Katalysatoren C2) sind beliebige gegebenenfalls substituierte Alkyl- Aralkyl- oder Arylreste tragende Amidinbasen, wobei die CN-Doppelbindung der Amidinstruktur sowohl Teil eines offenkettigen Moleküls als auch Bestandteil eines cyclischen oder bicyclischen Systems oder auch exocyclisch an einem Ringsystem angeordnet sein kann, oder beliebige Mischungen solcher Amidine.

Geeignete Amidinkatalysatoren C2), in denen die CN-Doppelbindung als Teil eines offenkettigen Moleküls vorliegt, sind beispielsweise N,N-Dimethyl-N'-phenyl-formamidin oder N,N,N'-Trimethylformamidin, deren Herstellung z. B. in Chem. Ber. 98, 1078 (1965) beschrieben ist. Als Beipiele für geeignete Amidine C2), bei denen die CN-Doppelbindung Bestandteil eines cyclischen Systems ist, seien hier genannt: in 1-Stellung substituierte 2-Methyltetrahydropyrimidine, wie sie z. B. nach der Lehre der DE-A 2 439 550 durch Umsetzung von N-monosubstituierten 1,3-Propandiaminen mit Acetessigsäurederivaten erhalten werden können, oder monocyclische Amidinbasen, wie sie die gemäß DE-A 1 078 568 durch Reaktion von Carbamoylchloriden aus sekundären Aminen mit Lactamen zugänglich sind. Geeignete Katalysatoren C2), bei denen die CN-Doppelbindung exocyclisch an einem Ringsystem angeordnet ist sind beispielsweise Imine N-alkylsubstituierter Lactame, wie 2-Methylimino-1-methyl-pyrrolidon, dessen Herstellung z. B. in Chem. Ber. 101, 3002 (1968) beschrieben ist.

Bevorzugte Katalysatoren C2) sind jedoch bicyclische, N,N,N'-trisubstituierte Amidinstrukturen enthaltende Katalysatoren der allgemeinen Formel (III) 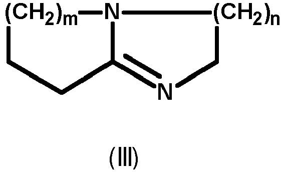 zum Einsatz, in welcher m für eine ganze Zahl von 1 bis 9, vorzugsweise von 1 bis 3, und n für eine ganze Zahl von 1 bis 3, vorzugsweise für 2, steht.

Die Herstellung solcher bicyclischen Amidine ist bekannt und beispielsweise in der DE-A 1545855 oder der EP-A 662 476 beschrieben. Besonders bevorzugte Katalysatoren C2) für das erfindungsgemäße Verfahren sind 1,5-Diazabicyclo[4.3.0]non-5-en (DBN) und 1,8-Diazabicyclo[5.4.0]undec-7-en (DBU).

In den erfindungsgemäßen Zusammensetzungen kommen die Katalysatoren C1) immer gemeinsam mit Katalysatoren C2) zum Einsatz, wobei es sich bei den Katalysatoren C1) und Katalysatoren C2) jeweils sowohl um Einzelverbindungen C1) und C2) der vorstehende genannten Art, als auch jeweils um beliebige Mischungen aus mindestens zwei solcher Katalysatoren C1) oder C2) handeln kann. Die Menge der Katalysatoren C1) und C2) in den erfindungsgemäßen Zusammensetzungen beträgt dabei für jede einzelne Katalysatorkomponente C1) und C2) jeweils von 0,0005 bis 5 Gew.-%, vorzugsweise 0,0025 bis 4 Gew.-%, besonders bevorzugt 0,005 bis 2,5 Gew.-%, ganz besonders bevorzugt 0,05 % bis 0,5 %, bezogen auf das Gesamtgewicht der Komponenten A) und B), exklusive gegebenenfalls in diesen Komponenten vorliegender Lösemittel, Hilfs- oder Zusatzstoffe.

Entsprechend kann die Gesamtmenge an Katalysatoren C1) und C2) in den erfindungsgemäßen Zusammensetzungen von 0,001 bis 10 Gew.-%, vorzugsweise 0,005 bis 8 Gew.-%, besonders bevorzugt 0,01 bis 5 Gew.-%, ganz besonders bevorzugt 0,1 % bis 1 %, bezogen auf das Gesamtgewicht der Komponenten A) und B), exklusive gegebenenfalls in diesen Komponenten vorliegender Lösemittel, Hilfs- oder Zusatzstoffe betragen.

Die erfindungsgemäßen Zusammensetzungen eignen sich hervorragend zur Herstellung von Polyurethan-Kunststoffen und werden hierfür verwendet. Bevorzugt finden die erfindungsgemäßen Zusammensetzungen zur Herstellung von Beschichtungsmitteln Anwendung.

Daher sind Beschichtungsmittel, enthaltend wenigstens eine, mindestens eine Uretdiongruppe aufweisende Komponente A), mindestens eine, mindestens eine Hydroxylgruppe aufweisende Komponente B), mindestens einen Katalysator C1) mit Imidazolium- oder Imidazolinium-Struktur und mindestens einen Katalysator C2) mit Amidinstruktur sowie gegebenenfalls weitere Hilfs- und Zusatzstoffe, ebenfalls Gegenstand der Erfindung.

Die Aushärtung der erfindungsgemäßen Zusammensetzungen erfolgt in Abhängigkeit von der Aktivität des eingesetzten Katalysators in der Regel im Temperaturbereich von 20 bis 200°C, vorzugsweise von 60 bis 180°C, besonders bevorzugt von 70 bis 160°C und ganz besonders bevorzugt von 80 bis 140°C, vorzugsweise über einen Zeitraum von 1 Minute bis zu 12 Stunden, bevorzugt 10 Minuten bis 3 Stunden.

Unter diesen Bedingungen reagieren die in Komponente A) ursprünglich enthaltenen Uretdiongruppen in der Regel vollständig unter Bildung von Allophanatgruppen und gegebenenfalls Isocyanuratgruppen ab.

Ein weiterer Gegenstand der Erfindung ist die Verwendung mindestens einer erfindungsgemäßen Zusammensetzung zur Herstellung von Polyurethan-Kunststoffen.

Außerdem ist ein weiterer Gegenstand der Erfindung die Verwendung mindestens einer erfindungsgemäßen Zusammensetzung zur Herstellung von Beschichtungsmitteln.

Als Untergründe für die mit Hilfe der erfindungsgemäßen Zusammensetzungen formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Weitere Gegenstände der Erfindung sind Beschichtungsmittel enthaltend mindestens eine erfindungsgemäße Zusammensetzung und ein Substrat, beschichtet mit einem gegebenenfalls unter Wärmeeinwirkung ausgehärteten erfindungsgemäßen Beschichtungsmittel.

Die mit den erfindungsgemäßen Zusammensetzungen formulierten Beschichtungsmittel, denen gegebenenfalls die üblichen, dem Fachmann aus der Lacktechnologie bekannten Hilfs- und Zusatzmittel, wie z. B. Lösungsmittel, UV-Stabilisatoren, Antioxidantien, Verlaufsmittel, Rheologieadditive, Slipadditive, Farbstoffe, Mattierungsmittel, Flammschutzmittel, Hydrolyseschutzmittel, Mikrobizide, Algizide, Wasserfänger, Thixotropieträger, Netzmittel, Entlüftungsmittel, Haftvermittler, Füllstoffe und/oder Pigmente, einverleibt werden können, ergeben unter den genannten Aushärtebedingungen Filme mit guten lacktechnischen Eigenschaften.

Ebenfalls Gegenstand der Erfindung sind Polyurethan-Kunststoffe, vorzugsweise Beschichtungen, die durch Verwendung der oben beschriebenen Beschichtungsmittel erhalten wurden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate 5 von 250 s-1.

Die Rest-Monomeren Gehalte wurden nach DIN EN ISO 10283:2007-11 gaschromatographisch mit internem Standard gemessen.

Die Zusammensetzungen des HDI-Uretdionpolyisocyanats wurde durch Gelpermationschromatographie in Anlehnung an DIN 55672-1:2016-03 (Gelpermeationschromatographie (GPC) - Teil 1: Tetrahydrofuran (THF) als Elutionsmittel) ermittelt, mit der Änderung, dass mit einer Flußrate von 0,6 ml/min statt 1,0 ml/min gearbeitet wurde. Die dem Chromatogramm entnommenen Anteile der unterschiedlichen Oligomere in Flächen-%, welche softwaregestützt ermittelt wurden, wurden näherungsweise jeweils Anteilen in Gew.-% gleichgesetzt.

Die Bestimmung der Pendeldämpfung nach König erfolgte nach DIN EN ISO 1522:2007-04 auf Glasplatten.

Die Mikrohärte (Oberflächenhärte/ Martenshärte bei einer Prüfkraft von 0,6 mN) sowie der elastische Verformungsanteil der Lackfilme wurde mit einem Gerät Fischerscope HM 2000 nach DIN EN ISO 14577-1:2015-11 gemessen.

Appearance-Messungen wurden mit einem "Wave-Scan"-Gerät der Fa. BYK-Gardner GmbH, Geretsried, DE durchgeführt. Angegeben sind Werte für Dullness (je kleiner der Wert desto weniger matt) und Distinctness of image DOI (je größer der Wert desto höher die Brillianz) jeweils als Mittelwerte aus fünf Einzelmessungen.

Die Bestimmung der Lösemittelbeständigkeit erfolgte mit Xylol als typischem Lacklösemittel. Dazu wurde eine kleine Menge des Lösemittels in ein Reagenzglas gegeben und mit einem Wattebausch an der Öffnung versehen, so dass eine mit Xylol gesättigte Atmosphäre innerhalb des Reagenzglases entstand. Das Reagenzglas wurde anschließend mit dem Wattebausch auf die Lackoberfläche gebracht und verblieben dort für 5 Min. Nach Abwischen des Lösemittels wurde der Film auf Zerstörung/Erweichung/Haftverlust geprüft. (0 = keine Veränderung, 5 = Film zerstört)

### Ausgangsverbindungen

### Herstellung eines HDI-Polyuretdionvernetzers

Nach dem in Beispiel 1 der EP-A 0 789 017 beschriebenen Verfahren wurde durch Tributylphosphin-katalysierte Oligomerisierung von 1,6-Diisocyanatohexan (HDI) und anschließende destillative Aufarbeitung 1,3-bis(6-isocyanatohexyl)-1,3-diazetidin-2,4-dion (ideales Bis(6-isocyanatohexyl)-uretdion) hergestellt.

| | |
|---|---|
| NCO-Gehalt: | 25,0 % |
| monomeres HDI: | < 0,03 % |
| Viskosität (23°C): | 28 mPas |

Nach gelpermeationschromatographischer Untersuchung (GPC) liegt folgende Zusammensetzung vor:

| | | |
|---|---|---|
| HDI-Uretdion (n = 2): | 99,2 % | (nach GPC) |
| HDI-Isocyanurat (n = 3): | 0,4 % | (nach GPC) |
| höhere Oligomere: | 0,4 % | (nach GPC) |

1000 g (5,95 val) dieses idealen Bis(6-isocyanatohexyl)-uretdions (NCO-Gehalt:25,0 %) wurden in 800 g Butylacetat gelöst, mit 4,6 g (0,2 Gew.-%) einer 10 %igen Lösung von Dibutylzinndilaurat (DBTL) in Butylacetat versetzt und unter trockenem Stickstoff und Rühren auf 80°C erwärmt. Zu dieser Lösung wurde innerhalb von 2 Stunden eine Mischung aus 347,5 g (4,76 val) 2,2,4-Trimethylpentan-1,3-diol und 154,7 g (1,19 val) 2-Ethyl-1-hexanol zugetropft. Nach einer Rührzeit von 16 Stunden bei 80°C betrug der NCO-Gehalt < 0,2 %. Es wurde eine praktisch farblose Lösung eines HDI-Polyuretdionvernetzers (HDI-UD2) erhalten.

| | | |
|---|---|---|
| NCO-Gehalt: | 0,16 % | |
| Uretdiongruppengehalt: | 10,8 % | (berechnet als C₂N₂O₂, Molekulargewicht 84) |
| Uretdion-Funktionalität: | 5 | (berechnet) |
| Festkörpergehalt:: | ca. 65 % | |
| Viskosität (23°C): | 1400 mPas | |

### Katalysatoren C1)

1-Ethyl-3-methylimidazoliumacetat (97 %), Sigma-Aldrich Chemie GmbH, München, DE 1-Ethyl-3-methylimidazoliumpivalat hergestellt nach dem in RSC Advances, 2019, Vol. 9, 4048 - 4053 von D. Hirose, S. B. Wardhana Kusuma, S. Nomura, M. Yamaguchi, Y. Yasaka, R. Kakuchi und K. Takahashi beschriebenen Verfahren.

### Katalysator C2)

1,8-Diazabicyclo[5.4.0]undec-7-en, DBU (98 %), Sigma-Aldrich Chemie GmbH, München, DE

### Beispiele 1 bis 5 (erfindungsgemäß und Vergleich)

Jeweils 2,5 g (0,014 val) eines handelsüblichen aromatenfreien, verzweigten Polyesterpolyols mit einem Festkörpergehalt von 75 %ig in Butylacetat und einem OH-Gehalt von 9,5 %, bezogen auf Festharz, erhältlich unter der Bezeichnung Desmophen^{®} 775 (Covestro Deutschland AG, Leverkusen, DE), wurden mit 10,4 g (0,014 val) des vorstehend beschriebenen HDI-Polyuretdionvernetzers entsprechend einem Äquivalentverhältnis von Hydroxylgruppen zu Uretdiongruppen von 1 : 1 zu einem Beschichtungsmittel gemischt und nach Zugabe einer Katalysatorkomponente mittels einer Lackhantel in einer Auftrags-Schichtdicke von 180 µm auf eine entfettete Glasplatte appliziert.

Die Lacke wurden nach 5-minütigem Ablüften bei Raumtemperatur innerhalb von 30 min bei 100°C ausgehärtet. In allen Fällen wurden völlig transparente Beschichtungen erhalten. Die nachfolgende Tabelle zeigt Art und Menge der jeweils zugesetzten Katalysatoren sowie lacktechnische Eigenschaften der erhaltenen Beschichtungen.

| | | 1 | 2 | 3 | 4 | 5 |
|---|---|---|---|---|---|---|
| | | | Vergleich | Vergleich | | Vergleich |
| EMIM-Pivalat | [mg]/[mmol] | 50/0,23 | 50/0,23 | - | - | - |
| EMIM-Acetat | [mg]/[mmol] | - | - | - | 50/0,29 | 50/0,29 |
| DBU | [mg]/[mmol] | 44/0,28 | - | 44/0,28 | 44/0,28 | - |
| Visuelle Beurteilung Verlauf | | gut | Struktur | gut | sehr gut | gut |
| Farbe | | farblos | farblos | gelb | farblos | farblos |
| Dullness | | 43,9 | n. m. | 38,2 | n. B. | n. B. |
| DOI | | 66,8 | n. m. | 72,1 | n. B. | n. B. |
| Pendeldämpfung | [s] | 188 | 90 | 79 | 186 | 103 |
| Martenshärte (0,6 mN) | [N/mm2] | 154,15 | 216,28 | 35,29 | n. B. | n. B. |
| elatischer Verformungsanteil nIT | [%] | 30,73 | 39,65 | 0,62 | n. B. | n. B. |
| Xylol-Beständigkeit | | 0 | 0 | 5 | 0 | 2 |

| | | | | | | |
|---|---|---|---|---|---|---|
| n. m.: nicht messbar n. b.: nicht bestimmt | | | | | | |

Der Vergleich zeigt, dass der Lack des erfindungsgemäßen Beispiels 1 zu einer vollvernetzten, harten Beschichtung mit guten optischen Eigenschaften aushärtet. Der Lackfilm aus Vergleichsbeispiel 3 weist zwar geringfügig bessere Verlaufseigenschaften auf, ist aber stark gelb verfärbt. Die geringen Werte für Pendeldämpfung und Mikrohärte sowie die sehr schlechte Xylolbeständigkeit deuten darauf hin, dass das ausschließlich mit DBU katalysierte System aus Vergleichsbeispiel 3 unter den gewählten Aushärtebedingungen nicht vernetzt. Die hohe Härte und gute Lösemittelbeständigkeit des nach Vergleichsbeispiel 2 erhaltenen Lackfilms zeigen, dass auch dieser vollständig vernetzt ist. Die Filmoberfläche ist allerdings so stark strukturiert, dass Werte zur optischen Appearance nicht gemessen werden konnten. Der ausschließlich mit einem Imidazoliumsalz katalysierte Lackfilm aus Vergleichsbeispiel 5 weist gegenüber den erfindungsgemäß hergestellten Beschichtungen 1 und 4 eine deutlich niedrigere Pendelhärte und eine geringere Xylolbeständigkeit auf.

## Patentansprüche

1. Zusammensetzungen, enthaltend
A) mindestens eine, mindestens eine Uretdiongruppe aufweisende Komponente,
B) mindestens eine, mindestens eine Hydroxylgruppe aufweisende Komponente,
C1) mindestens einen Katalysator, enthaltend ein Strukturelement der allgemeinen Formeln (I) und/oder (II) 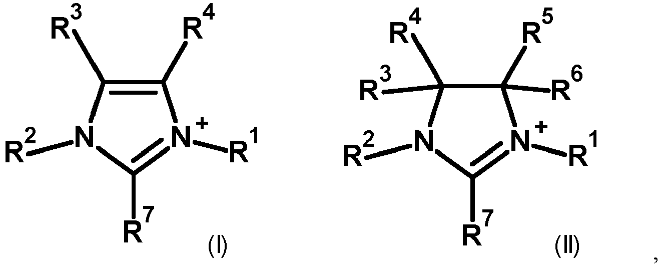 in welchen
R¹, R², R³, R⁴, R⁵ und R⁶ unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei die Reste auch in Kombination untereinander gegebenenfalls gemeinsam mit einem weiteren Heteroatom Ringe mit 3 bis 8 Kohlenstoffatomen bilden können, die gegebenenfalls weiter substituiert sein können, wobei
R³, R⁴, R⁵ und R⁶ unabhängig voneinander auch für Wasserstoff stehen können, und
R⁷ für Wasserstoff oder ein Carboxylat-Anion (COO⁻) steht, und
C2) mindestens einen, mindestens eine N,N,N'-trisubstituierte Amidinstruktur enthaltenden Katalysator mit einem Amidingruppengehalt (berechnet als CN₂;Molekulargewicht = 40) von 12,0 bis 47,0 Gew.-%.

2. Zusammensetzungen gemäß Anspruch 1, **dadurch gekennzeichnet, dass** es sich bei der Komponente A) um eine isocyanatfunktionelle Uretdiongruppen enthaltende Verbindungen A1) und/oder durch Umsetzung isocyanatfunktioneller Uretdiongruppen enthaltender Verbindungen A1) mit Alkoholen und/oder Aminen erhältliche Polyadditionsverbindungen A2) handelt.

3. Zusammensetzungen gemäß Anspruch 2, **dadurch gekennzeichnet, dass** es sich bei der Komponente A1) um Uretdiongruppen enthaltende Verbindungen auf Basis von PDI, HDI, IPDI, XDI, NBDI und/oder H₁₂-MDI handelt, die bevorzugt eine mittlere NCO-Funktionalität von mindestens 1,6 aufweisen und besonders bevorzugt einen Gehalt an Uretdionstrukturen (berechnet als C₂N₂O₂, Molekulargewicht = 84) von 10 bis 25 Gew.-% aufweisen.

4. Zusammensetzungen gemäß Anspruch 2 oder 3, **dadurch gekennzeichnet, dass** es sich bei den Polyadditionsverbindungen A2) um Verbindungen handelt, die durch Umsetzung isocyanatfunktioneller, Uretdiongruppen enthaltender Verbindungen A1) mit mindestens difunktionellen Polyolen des Molekulargewichtsbereiches 62 bis 22000 und gegebenenfalls Monoalkoholen unter Einhaltung eines Äquivalentverhältnisses von Isocyanatgruppen zu gegenüber Isocyanaten reaktiven Gruppen von 2 : 1 bis 0,5 : 1 hergestellt werden, und die in lösemittelfreier Form einen Gehalt an freien Isocyanatgruppen von weniger als 5 Gew.-% aufweisen.

5. Zusammensetzungen gemäß einem der Ansprüche 1 bis 4, **dadurch gekennzeichnet, dass** es sich bei der Komponente B) um mindestens difunktionelle Polyole des Molekulargewichtsbereiches 62 bis 22000 handelt.

6. Zusammensetzungen gemäß einem der Ansprüche 1 bis 5, **dadurch gekennzeichnet, dass** die Komponenten A) und B) in einer solchen Mengen vorliegen, dass auf jede Uretdiongruppe der Komponente A) 0,5 bis 2,0 Hydroxylgruppen der Komponente B) entfallen.

7. Zusammensetzungen gemäß einem der Ansprüche 1 bis 6, **dadurch gekennzeichnet, dass** es sich bei der Komponente C1) um Katalysatoren, enthaltend ein Strukturelement der allgemeinen Formeln (I) und/oder (II) handelt, in welchen
R¹ und R² unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 12 Kohlenstoffatomen bedeuten, die substituiert oder unsubstituiert sind und/oder Heteroatome in der Kette aufweisen,
R³, R⁴, R⁵ und R⁶ für Wasserstoff stehen, und wobei
R⁷ für Wasserstoff oder ein Carboxylat-Anion (COO⁻) steht.

8. Zusammensetzungen gemäß einem der Ansprüche 1 bis 7, **dadurch gekennzeichnet, dass** es sich beim Katalysator C1) um Imidazoliumsalze der genannten Art mit Carboxylat-Anionen, ganz besonders bevorzugt 1,3-Dimethylimidazolium-2-carboxylat, 1-Ethyl-3-methylimidazolium-2-carboxylat, 1-Ethyl-3-methylimidazoliumacetat, 1-Butyl-3-methylimidazolium-2-carboxylat, 1-Ethyl-3-methylimidazoliumpivalat und/oder 1-Butyl-3-methylimidazoliumacetat handelt.

9. Zusammensetzungen gemäß einem der Ansprüche 1 bis 8, **dadurch gekennzeichnet, dass** es sich beim Katalysator C2) um bicyclische, N,N,N'-trisubstituierte Amidinstrukturen enthaltende Katalysatoren der allgemeinen Formel (III), 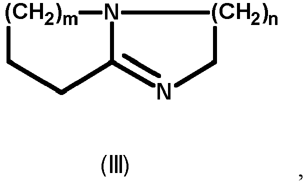 handelt, in welcher m für eine ganze Zahl von 1 bis 9 und n für eine ganze Zahl von 1 bis 3 steht.

10. Zusammensetzungen gemäß einem der Ansprüche 1 bis 9, **dadurch gekennzeichnet, dass** es sich beim Katalysator C2) um 1,5-Diazabicyclo[4.3.0]non-5-en (DBN) und/oder 1,8-Diazabicyclo[5.4.0]undec-7-en (DBU) handelt.

11. Zusammensetzungen gemäß einem der Ansprüche 1 bis 10, **dadurch gekennzeichnet, dass** die Katalysatoren C1) und C2) jeweils in einer Menge von 0,0005 bis 5 Gew.-%, vorzugsweise 0,0025 bis 4 Gew.-%, besonders bevorzugt 0,005 bis 2,5 Gew.-%, ganz besonders bevorzugt 0,05 % bis 0,5 %, bezogen auf das Gesamtgewicht der Komponenten A) und B), exklusive gegebenenfalls in diesen Komponenten vorliegender Lösemittel, Hilfs- oder Zusatzstoffe, vorliegen.

12. Verwendung von Zusammensetzungen gemäß einem der Ansprüche 1 bis 11 zur Herstellung von Polyurethan-Kunststoffen, insbesondere zur Herstellung von Beschichtungsmitteln.

13. Beschichtungsmittel enthaltend Zusammensetzungen gemäß einem der Ansprüche 1 bis 11.

14. Substrat, beschichtet mit einem gegebenenfalls unter Wärmeeinwirkung ausgehärteten Beschichtungsmittel gemäß Anspruch 13.

15. Polyurethan-Kunststoff, erhalten aus einer gegebenenfalls unter Wärmeeinwirkung ausgehärteten Zusammensetzung gemäß einem der Ansprüche 1 bis 11.

## Claims

1. Compositions containing
A) at least one component comprising at least one uretdione group,
B) at least one component comprising at least one hydroxyl group,
C1) at least one catalyst comprising a structural element of general formulae (I) and/or (II) 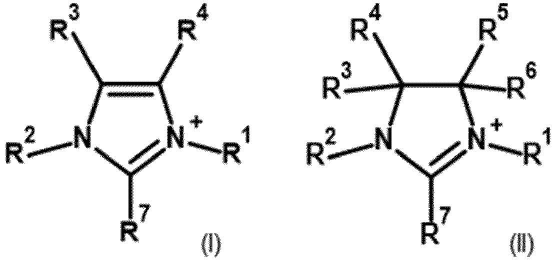 ,
in which
R¹, R², R³, R⁴, R⁵ and R⁶ independently of one another stand for identical or different radicals which represent saturated or unsaturated, linear or branched, aliphatic, cycloaliphatic, araliphatic or aromatic organic radicals having 1 to 18 carbon atoms which are substituted or unsubstituted and/or have heteroatoms in the chain, wherein the radicals may also in combination with one another and optionally together with a further heteroatom form rings having 3 to 8 carbon atoms which may optionally be further substituted, wherein
R³, R⁴, R⁵ and R⁶ may independently of one another also stand for hydrogen, and
R⁷ stands for hydrogen or a carboxylate anion (COO⁻), and
C2) at least one catalyst comprising at least one N,N,N'-trisubstituted amidine structure and having an amidine group content (calculated as CN₂; molecular weight = 40) of 12.0% to 47.0% by weight.

2. Compositions according to Claim 1, **characterized in that** the component A) is selected from isocyanate-functional uretdione-containing compounds A1) and/or polyaddition compounds A2) obtainable by reaction of isocyanate-functional uretdione-containing compounds A1) with alcohols and/or amines.

3. Compositions according to Claim 2, **characterized in that** the component A1) is selected from uretdione-containing compounds based on PDI, HDI, IPDI, XDI, NBDI and/or H₁₂-MDI which preferably have an average NCO functionality of at least 1.6 and particularly preferably have a content of uretdione structures (calculated as C₂N₂O₂, molecular weight = 84) of 10% to 25% by weight.

4. Compositions according to Claim 2 or 3, **characterized in that** the polyaddition compounds A2) are selected from compounds which are produced by reaction of isocyanate-functional, uretdione-containing compounds A1) with at least difunctional polyols in the molecular weight range 62 to 22 000 and optionally monoalcohols while maintaining an equivalent ratio of isocyanate groups to isocyanurate-reactive groups of 2 : 1 to 0.5 : 1 and in solvent-free form have a content of free isocyanate groups of less than 5% by weight.

5. Compositions according to any of Claims 1 to 4, **characterized in that** the component B) is selected from at least difunctional polyols in the molecular weight range 62 to 22 000.

6. Compositions according to any of Claims 1 to 5, **characterized in that** the components A) and B) are present in amounts such that for each uretdione group of the component A) there are 0.5 to 2.0 hydroxyl groups of the component B).

7. Compositions according to any of Claims 1 to 6, **characterized in that** the component C1) is selected from catalysts containing a structural element of general formulae (I) and/or (II), in which
R¹ and R² independently of one another stand for identical or different radicals which represent saturated or unsaturated, linear or branched, aliphatic, cycloaliphatic, araliphatic or aromatic organic radicals which have 1 to 12 carbon atoms, are substituted or unsubstituted and/or have heteroatoms in the chain,
R³, R⁴, R⁵ and R⁶ stand for hydrogen, and wherein
R⁷ stands for hydrogen or a carboxylate anion (COO⁻) .

8. Compositions according to any of Claims 1 to 7, **characterized in that** the catalyst C1) is selected from imidazolium salts of the recited type with carboxylate anions, very particularly preferably 1,3-dimethylimidazolium 2-carboxylate, 1-ethyl-3-methylimidazolium 2-carboxylate, 1-ethyl-3-methylimidazolium acetate, 1-butyl-3-methylimidazolium 2-carboxylate, 1-ethyl-3-methylimidazolium pivalate and/or 1-butyl-3-methylimidazolium acetate.

9. Compositions according to any of Claims 1 to 8, **characterized in that** the catalyst C2) is selected from bicyclic catalysts containing N,N,N'-trisubstituted amidine structures of general formula (III) 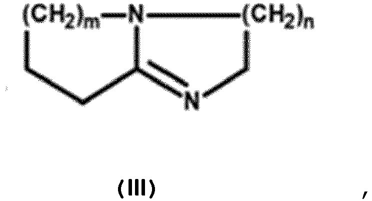 in which m is an integer from 1 to 9 and n is an integer from 1 to 3.

10. Compositions according to any of Claims 1 to 9, **characterized in that** the catalyst C2) is 1,5-diazabicyclo[4.3.0]non-5-ene (DBN) and/or 1,8-diazabicyclo[5.4.0]undec-7-ene (DBU).

11. Compositions according to any of Claims 1 to 10, **characterized in that** the catalysts C1) and C2) are each present in an amount of 0.0005% to 5% by weight, preferably 0.0025% to 4% by weight, particularly preferably 0.005% to 2.5% by weight, very particularly preferably 0.05% to 0.5%, based on the total weight of the components A) and B), excluding any solvents, auxiliaries or additives present in these components.

12. Use of compositions according to any of Claims 1 to 11 for producing polyurethane plastics, especially for producing coating formulations.

13. Coating formulation containing compositions according to any of Claims 1 to 11.

14. Substrate coated with an optionally heat-cured coating formulation according to Claim 13.

15. Polyurethane plastic obtained from an optionally heat-cured composition according to any of Claims 1 to 11.

## Revendications

1. Compositions, contenant
A) au moins un composant comportant au moins un groupe uretdione,
B) au moins un composant comportant au moins un groupe hydroxyle,
C1) au moins un catalyseur contenant un élément structural des formules générales (I) et/ou (II) 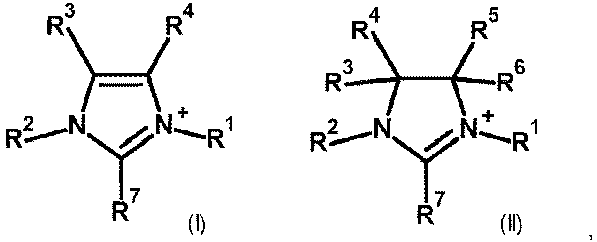 dans lesquelles
R¹, R², R³, R⁴, R⁵ et R⁶ représentent, indépendamment les uns des autres, des radicaux identiques ou différents qui désignent des radicaux organiques saturés ou insaturés, linéaires ou ramifiés, aliphatiques, cycloaliphatiques, araliphatiques ou aromatiques ayant de 1 à 18 atomes de carbone, substitués ou non substitués, et/ou comportent des hétéroatomes dans la chaîne, les radicaux pouvant également former en combinaison les uns avec les autres, éventuellement avec un autre hétéroatome, des cycles comportant de 3 à 8 atomes de carbone qui peuvent éventuellement être encore substitués,
R³, R⁴, R⁵ et R⁶ peuvent également représenter, indépendamment les uns des autres, hydrogène, et
R⁷ représente hydrogène ou un anion carboxylate (COO⁻), et
C2) au moins un catalyseur contenant au moins une structure amidine N,N,N'-trisubstituée comportant une teneur en groupes amide (calculée en tant que CN₂ ; poids moléculaire = 40) de 12,0 à 47,0 % en poids.

2. Compositions selon la revendication 1, **caractérisées en ce que** le composant A) désigne des composés A1) contenant des groupes uretdione à fonction isocyanate et/ou des composés de polyaddition A2) pouvant être obtenus par réaction de composés A1) contenant des groupes uretdione à fonction isocyanate avec des alcools et/ou des amines.

3. Compositions selon la revendication 2, **caractérisées en ce que** le composant A1) désigne des composés contenant des groupes uretdione à base de PDI, HDI, IPDI, XDI, NBDI et/ou H₁₂-MDI, qui présentent préférablement une fonctionnalité NCO moyenne d'au moins 1,6 et particulièrement préférablement, qui présentent une teneur en structures uretdione (calculée en tant que C₂N₂O₂ ; poids moléculaire = 84) de 10 à 25 % en poids.

4. Compositions selon la revendication 2 ou 3, **caractérisées en ce que** les composés de polyaddition A2) désignent des composés qui sont préparés par réaction de composés A1) à fonction isocyanate contenant des groupes uretdione avec au moins des polyols difonctionnels dans la plage de poids moléculaires allant de 62 à 22 000 et éventuellement des monoalcools, tout en conservant un rapport équivalent des groupes isocyanate sur les groupes réagissant avec les isocyanates de 2 : 1 à 0,5 : 1 et qui, sous une forme sans solvant, présentent une teneur en groupes isocyanate libre inférieure à 5 % en poids.

5. Compositions selon l'une quelconque des revendications 1 à 4, **caractérisées en ce que** le composant B) désigne au moins des polyols difonctionnels dans la plage de poids moléculaires allant de 62 à 22 000.

6. Compositions selon l'une quelconque des revendications 1 à 5, **caractérisées en ce que** les composants A) et B) sont présents en une quantité telle que, pour chaque groupe uretdione du composant A), il y a 0,5 à 2,0 groupes hydroxyle du composant B).

7. Compositions selon l'une quelconque des revendications 1 à 6, **caractérisées en ce que** le composant C1) désigne des catalyseurs contenant un élément structural de formules générales (I) et/ou (II), dans lesquelles
R¹ et R² représentent, indépendamment l'un de l'autre, des radicaux identiques ou différents, c'est-à-dire des radicaux organiques saturés ou insaturés, linéaires ou ramifiés, aliphatiques, cycloaliphatiques, araliphatiques ou aromatiques comportant de 1 à 12 atomes de carbone, substitués ou non substitués et/ou comportant des hétéroatomes dans la chaîne,
R³, R⁴, R⁵ et R⁶ représentent hydrogène, et
R⁷ représente hydrogène ou un anion carboxylate (COO⁻).

8. Compositions selon l'une quelconque des revendications 1 à 7, **caractérisées en ce que** le catalyseur C1) désigne des sels d'imidazolium du type mentionné avec des anions carboxylate, tout particulièrement préférablement le 1,3-diméthylimidazolium-2-carboxylate, le 1-éthyl-3-méthylimidazolium-2-carboxylate, le 1-éthyl-3-méthylimidazolium acétate, le 1-butyl-3-méthylimidazoliium-2-carboxylate, le 1-éthyl-3-méthylimidazolium pivalate et/ou le 1-butyl-3-méthylimidazolium acétate.

9. Compositions selon l'une quelconque des revendications 1 à 8, **caractérisées en ce que** le catalyseur C2) désigne des catalyseurs contenant des structures amidine bicycliques N,N,N'-trisubstituées de formule générale (III), 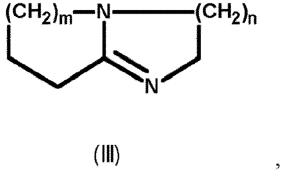 dans laquelle m est un nombre entier de 1 à 9 et n représente un nombre entier de 1 à 3.

10. Compositions selon l'une quelconque des revendications 1 à 9, **caractérisées en ce que** le catalyseur C2) désigne le 1,5-diazabicyclo[4.3.0]non-5-ène (DBN) et/ou le 1,8-diazabicyclo[5.4.0]undéc-7-ène (DBU).

11. Compositions selon l'une quelconque des revendications 1 à 10, **caractérisées en ce que** les catalyseurs C1) et C2) sont chacun présents, en une quantité de 0,0005 à 5 % en poids, préférablement de 0,0025 à 4 % en poids, particulièrement préférablement de 0,005 à 2,5 % en poids, tout particulièrement préférablement de 0,05 % à 0,5 %, par rapport au poids total des composants A) et B), à l'exclusion d'éventuels solvants, agents auxiliaires ou additifs présents dans ces composants.

12. Utilisation de compositions selon l'une quelconque des revendications 1 à 11 pour la préparation de matières plastiques de type polyuréthane, en particulier pour la préparation d'agents de revêtement.

13. Agents de revêtement contenant des compositions selon l'une quelconque des revendications 1 à 11.

14. Substrat, revêtu par un matériau de revêtement selon la revendication 13 éventuellement durci sous l'effet de chaleur.

15. Matière plastique de type polyuréthane obtenue à partir d'une composition selon l'une quelconque des revendications 1 à 11 éventuellement durcie sous l'effet de chaleur.
